# EUROPÄISCHE PATENTSCHRIFT

(11) **EP 2 061 575 B1**
(45) Veröffentlichungstag und Bekanntmachung des Hinweises auf die Patenterteilung: **07.08.2013**
(21) Anmeldenummer: 07800176.5
(22) Anmeldetag: 12.09.2007
(51) Int. Cl.: B01D 33/46, B29C 47/68

(54) **VORRICHTUNG ZUM KONTINUIERLICHEN FILTERN VON VERUNREINIGUNGEN AUS EINER KUNSTSTOFFSCHMELZE**
DEVICE FOR CONTINUOUS FILTRATION OF IMPURITIES FROM A MOLTEN PLASTIC
DISPOSITIF DE FILTRATION EN CONTINU D'IMPURETÉS PRÉSENTES DANS DU PLASTIQUE FONDU

(30) Priorität: 13.09.2006 AT 15212006
(43) Veröffentlichungstag der Anmeldung: 27.05.2009
(73) Patentinhaber: SCHULZ, Helmuth, 4020 Linz (AT)
(72) Erfinder: SCHULZ, Helmuth, 4020 Linz (AT)
(74) Vertreter: Hübscher, Helmut
(86) Internationale Anmeldenummer: PCT/AT2007/000431
(87) Internationale Veröffentlichungsnummer: WO 2008/031127

(56) Entgegenhaltungen:
- EP-A- 0 655 268
- WO-A-96/38214
- WO-A-2004/002715
- GB-A- 532 134

## Beschreibung

Die Erfindung betrifft eine Vorrichtung zum kontinuierlichen Filtern von Verunreinigungen aus einer Kunststoffschmelze mit einem Filtereinsatz in Form eines um seine Rotationsachse drehbar gegenüber einem Gehäuse gelagerten und von der Kunststoffschmelze durchströmten hohlen Rotationskörpers, der in einem Strömungskanal des Gehäuses zwischen einem Zuführkanal für die zu filtrierende Kunststoffschmelze und einem Abfuhrkanal für die filtrierte Kunststoffschmelze angeordnet ist und mit einer eine mit dem Filtereinsatz zusammenwirkende Förderschnecke umfassenden Austragsvorrichtung für vom Filter zurückgehaltene Verunreinigungen.

Mit derartigen Vorrichtungen sollen Kunststoffe, insbesondere wiederaufzubereitende Kunststoffe, vor ihrer weiteren Bearbeitung wirtschaftlich von Schmutzstoffen befreit werden. In diesem aufzubereitenden Gemisch befinden sich die auszufilternden Verschmutzungen wie Klebestreifen, Etiketten, Aluminiumverschlußdeckel u. dgl., wobei eine Abtrennung dieser Reststoffe durch eine Ausnützung unterschiedlicher spezifischer Dichten, insbesondere kleinerer Schmutzteilchen, nur schwer möglich ist. Erschwerend wirkt dabei, daß der Verunreinigungsgrad sehr hoch sein kann, was den Reinigungsaufwand erheblich erhöht und die vorgesehenen Filter naturgemäß erheblich belastet. Deshalb wird der Kunststoff nach einer Grobreinigung zuerst aufgeschmolzen und anschließend durch die Vorrichtung gefördert. Für die Filtrierung stark verschmutzter Massen ist es bekannt, diese eingangs genannten Vorrichtungen vorzusehen (WO 2004/002715 A). Als Filtereinsatz kommt dabei ein mantelseitig mit Löchern versehener, in einem Gehäuse rotierender Filterkörper zum Einsatz, der die Verunreinigungen in Abhängigkeit der Bohrungsgröße zurückhält, welche Verunreinigungen mittels eines die Austragsvorrichtung bildenden Schabers von der Zustromseite des Filtereinsatzes abgeschabt und mittels der Förderschnecke aus dem Gehäuse ausgetragen werden. Die Bohrungen derartiger Filter werden beispielsweise mittels Elektronenstrahlen oder mittels Laser hergestellt und sind üblicherweise auf einen zylinderförmigen Stützkörper aufgezogen bzw. darauf befestigt. Nachteilig ist bei dieser bekannten Konstruktion, daß es nach einem Filtervorgang schwierig ist, den Filtereinsatz aus dem Gehäuse mit üblichen Werkzeugen herauszutrennen, wie dies zum Zweck einer Reparatur oder eines Ersatzes regelmäßig erforderlich ist. Ein derartiger Wechsel ist meist nur mit hoher Anstrengung möglich, wobei der Filtereinsatz meist zerstört wird. Ein weiterer Nachteil liegt darin, daß zur Wartung derartiger Vorrichtungen verhältnismäßig lange Stilstandszeiten in Kauf genommen werden müssen und daß derartige Filter verhältnismäßig teuer sind.

Eine weitere Vorrichtung zum Reinigen einer Schmelze offenbart die DE 42 40 461 C1, gemäß der die Filter in einer Scheibe auswechselbar gehalten sind, welche die Filterelemente in auf einer Kreisbahn angeordneten Ausnehmungen austauschbar aufnimmt. Die einzelnen Filter sind somit in einer Art Trommelmagazin angeordnet, womit die Möglichkeit besteht stets neue Filter in den von der Schmelze durchströmten Strömungskanal einzubringen, in dem die Scheibe um den Winkelversatz zwischen zwei Filtereinsätzen weitergedreht wird. Eine kontinuierliche Reinigung der Filtereinsätze ist dabei nicht vorgesehen.

Vorrichtungen zum Reinigen von strömungsfähigen Massen, insbesondere vom Ausfiltern von Zellulose, sind beispielsweise aus der WO 96/38214 A1 und der EP 655268 A2 bekannt.

Der Erfindung liegt die Aufgabe zugrunde, eine Vorrichtung der eingangs geschilderten Art zu schaffen, welche die vorgenannten Nachteile vermeidet und die bei möglichst einfacher Konstruktion einen raschen und problemlosen Filterwechsel gestattet und dabei einen hohen Reinigungsgrad der Masse ermöglicht.

Die Erfindung löst diese Aufgabe dadurch, dass der Filtereinsatz ein stirnseitig des Rotationskörpers angeordnetes scheibenförmiges, zur Rotationsachse koaxiales Filter umfasst und dass die Austragsvorrichtung neben der wenigstens einen, mit ihrer Drehachse vorzugsweise parallel zur Scheibenebene angeordneten, Förderschnecke mindestens einen in Drehrichtung des Filtereinsatzes hinter der Förderschnecke angeordneten und gegen den Filter angestellten Schaber umfasst.

Der wesentliche Vorteil der Erfindung liegt darin, daß ein erfindungsgemäß aufgebauter Filtereinsatz problemlos im Gehäuse montierbar bzw. demontierbar ist und daß derartige scheibenförmige Filter besonders einfach und kostengünstig gefertigt werden können. Diese scheibenförmigen Filter können ein- oder mehrteilig ausgebildet sein, werden am als Rotationskörper ausgebildeten Filterträger befestigt und der Filtereinsatz anschließend in das Gehäuse eingesetzt. Die Filter sind dabei mittels einer Schraubverbindung oder geeigneten Klemmvorrichtungen am Stützkörper montiert. Grundsätzlich ist es möglich, den Filtereinsatz gegenüber der Austragsvorrichtung im Gehäuse rotieren zu lassen. Gegebenenfalls kann es allerdings auch vorgesehen sein, die Austragsvorrichtung um die Rotationsachse des Rotationskörpers drehbar auszugestalten. Da die Filter bei einem Öffnen des Gehäuses konstruktionsbedingt stets unmittelbar frei liegen und zugänglich sind, ist mit der Erfindung stets ein rascher und problemloser Filterwechsel möglich. Ein eine Entnahme des Filtereinsatzes aus dem Gehäuse übermäßig stark beeinflussendes Verkleben des Filtereinsatzes im Gehäuse muss nach einem Aushärten der Kunststoffschmelze nicht befürchtet werden.

Einfachste Konstruktionsverhältnisse ergeben sich, wenn der Filtereinsatz mit zur Rotationsachse des Rotationskörpers senkrecht angeordneter Scheibenebene im Gehäuse drehangetrieben gelagert ist. Die Austragsvorrichtung arbeitet dabei mit dem Filter derart zusammen, dass die Filteroberfläche an der Austragsvorrichtung aufgrund des Drehantriebes kontinuierlich vorbeigeführt wird, wobei vom Filter zurückgehaltene Verunreinigungen von der Austragsvorrichtung kontinuierlich aus der Vorrichtung abgeschieden werden.

Um die Reinigungswirkung der Austragsvorrichtung zu erhöhen, umfasst diese neben der wenigstens einen, mit ihrer Drehachse vorzugsweise parallel zur Scheibenebene angeordneten, Förderschnecke mindestens einen in Drehrichtung des Filtereinsatzes hinter der Förderschnecke angeordneten und gegen den Filter angestellten Schaber. Es können sowohl ein als auch mehrere Schaber und/oder Austragsschnecken vorgesehen sein, die sich zur Austragsvorrichtung ergänzen. Die Drehrichtung der Austragsschnecke kann in Abhängigkeit der Betriebsverhältnisse gegenüber der Filtereinsatzdrehrichtung gleich- oder gegensinnig sein.

Mündet der Zuführkanal für die zu filtrierende Masse in einen das Filtrat dem Filter zuleitenden Ringkanal aus, der sich in Drehrichtung des Filtereinsatzes, also in Drehrichtung zur Förderschnecke hin, zum Filter hin verjüngt, ist gewährleistet, dass stets eine möglichst große Filterfläche zur Filtration zur Verfügung steht und ist durch die Drehbewegung des Filtereinsatzes gegenüber dem Ringkanal und aufgrund der zwischen Filter, Masse und Ringkanal vorherrschenden Reibungskräfte mit einfachen Mitteln ein erhöhter Filtrationsdruck auf den Filter und somit eine gewisse Zwangspressung der Masse durch das Filter gewährleistet.

Um einen raschen Filterwechsel durchführen zu können, empfiehlt es sich, wenn das Gehäuse wenigstens zwei lösbar miteinander verbundene Gehäuseteile ausbildet, wobei ein Gehäuseteil den Filtereinsatz und der andere Gehäuseteil die Austragsvorrichtung aufnimmt. Durch Öffnen der Verschlusselemente lassen sich die beiden Gehäusehälften rasch voneinander trennen, wonach unmittelbar alle wesentlichen Verschleißteile für Wartungszwecke offen liegen. Die Filter können dann, gegebenenfalls ohne den Filtereinsatz ausbauen zu müssen gewechselt bzw. gewartet werden. Des Weiteren kann auch die andere Gehäusehälfte mit dem Schaber und der Austragsschnecke in einfacher Weise gewartet werden, da die einzelnen Bauteile unmittelbar nach einem Trennen der beiden Gehäusehälften bereits zugänglich sind und nicht langwierig ausgebaut werden müssen.

Die parallel zur Filterscheibe angeordnete Schnecke nimmt das vom Schaber abgeschabte Material auf und leitet es aus dem Gehäuse ab. Die Schnecke kann mit unterschiedlichsten Profilen ausgestattet sein. Gegebenenfalls ist die Schnecke selbst als Schaber ausgebildet und dabei um eine ausreichende Schabwirkung zu gewährleisten, mit erhöhter Steigung und gegebenenfalls mehrgängig ausgebildet. Beispielsweise sei hier eine Schnecke mit einer Schabkante mit einem Schabwinkel von beispielsweise 90° erwähnt.

Soll ein möglichst geringen Verschleiß der Schnecke gewährleistet werden, sollte diese allerdings berührungslos gegenüber Siebscheibe rotieren. In diesem Fall wird das Abschaben von dem wenigstens einem Schaber gewährleistet, für den eine in gegen das Filter eindrückende Andrückeinrichtung vorgesehen sein kann. Diese Andrückeinrichtung umfaßt beispielsweise Federn oder hydraulische Stelltriebe. Bei Vorsehen eines Schabers ist darauf zu achten, daß der Totraum zwischen Schnecke und Schaber so klein wie möglich gehalten wird. Deshalb kann es von Vorteil sein, wenn der Schaber bereits einen Teil des Schneckengehäuses bildet.

### Kurze Beschreibung der Zeichnung

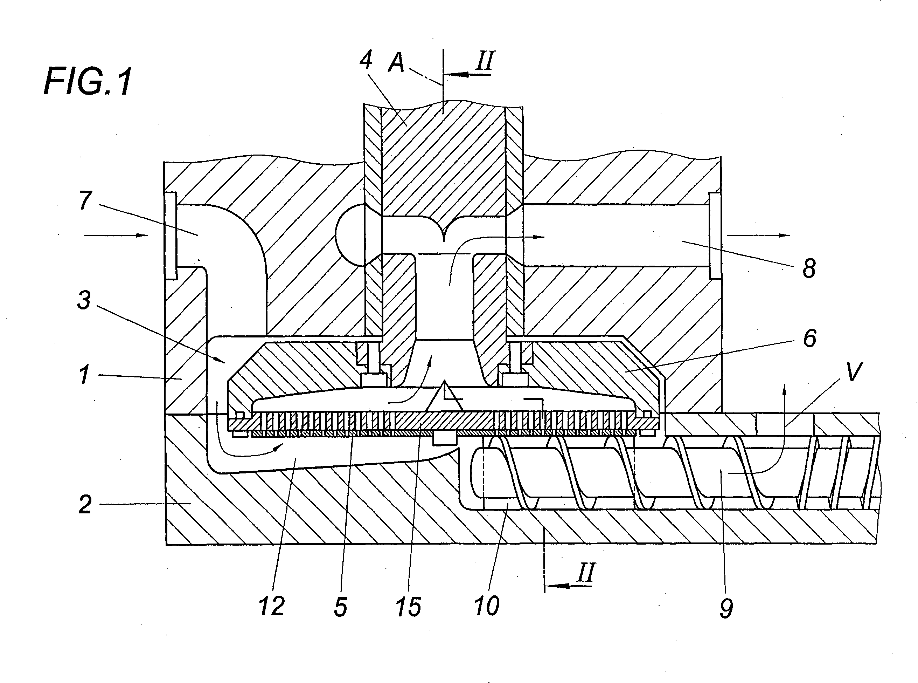

In der Zeichnung ist die Erfindung anhand eines Ausführungsbeispieles schematisch dargestellt. Es zeigen
Fig. 1 eine erfindungsgemäße Vorrichtung im Querschnitt und

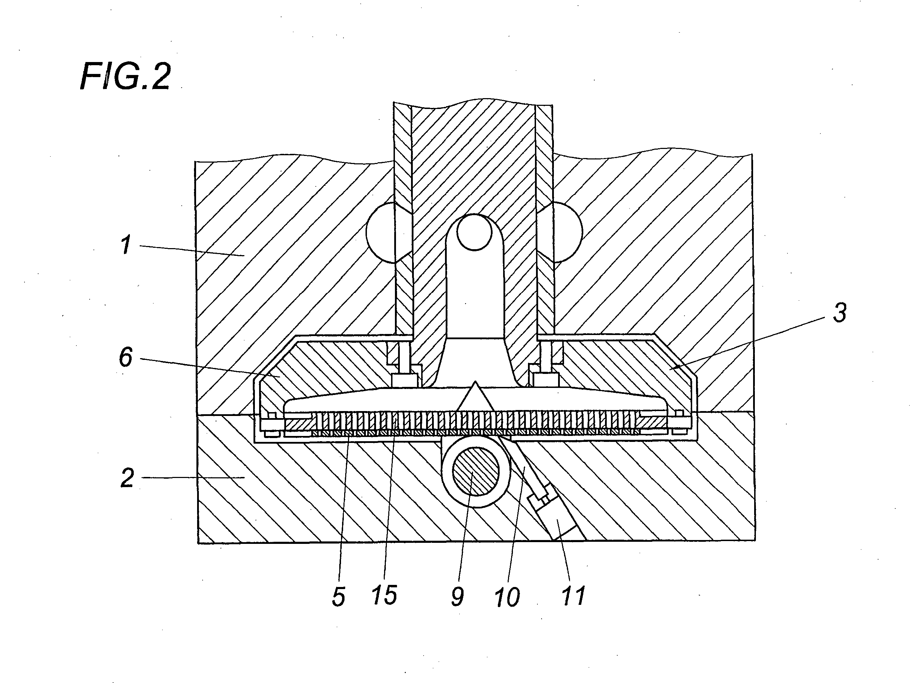

Fig. 2 die Vorrichtung aus Fig. 1 im Schnitt nach der Linie II-II.

### Weg zur Ausführung der Erfindung

Eine Vorrichtung zum kontinuierlichen Filtern von Verunreinigungen aus einer verschmutzten strömungsfähigen plastischen Masse, insbesondere einer Kunststoffschmelze, umfaßt ein Gehäuse mit zwei Gehäusehälften 1, 2, in dem ein Filtereinsatz 3 in Form eines um seine Rotationsachse A drehbar gegenüber dem Gehäuse 1, 2 gelagerten und von der strömungsfähigen Masse durchströmten hohlen Rotationskörpers. Der Filtereinsatz 3 umfaßt eine Filterwelle 4 und eine endseitig an der Filterwelle 4 befestigte, eine auf einem Träger 15 montierte Filterscheibe 5 aufnehmende Ringscheibe 6. Die am Träger 15 angeordnete Filterscheibe 5 ist mit dem Träger 15 bzw. der Ringscheibe 6 ebenso verschraubt wie die Ringscheibe 6 mit der Filterwelle 4. Die Ringscheibe 6 und die Filterwelle 4 sind hohl ausgebildet, um vom filtrierten Kunststoff durchströmt werden zu können.

Der Filtereinsatz 3 ist in einem Strömungskanal des Gehäuses 1, 2 zwischen einem Zuführkanal 7 für die zu filtrierende Masse und einem Abführkanal 8 für die filtrierte Masse angeordnet. Die Filtereinsatz 3 ist mit zur Rotationsachse A senkrecht angeordneter Scheibenebene im Gehäuse 1 drehangetrieben gelagert. Das die Filterkräfte aufnehmende Axiallager ist im dargestellten Ausführungsbeispiel ebenso wenig gezeigt wie die Antriebsvorrichtung für den Drehantrieb des Filtereinsatzes 3.

Zur kontinuierlichen Abreinigung des Filters 5 ist eine eine mit dem Filtereinsatz 3 zusammenwirkende Förderschnecke 9 umfassende Austragsvorrichtung für vom Filter 5 zurückgehaltene Verunreinigungen V vorgesehen. Dazu ist des weiteren neben der mit ihrer Drehachse parallel zur Scheibenebene angeordneten Förderschnecke 9 ein in Drehrichtung des Filtereinsatzes 3 hinter der Förderschnecke 9 angeordneter und gegen den Filter angestellter Schaber 10 vorgesehen, der zusammen mit der Gehäusehälfte 2 und der Filterscheibe 5 das Schneckengehäuse für die Förderschnecke 9 ausbildet. Für den Schaber 10 ist eine in gegen das Filter 5 andrückende Andrückeinrichtung 11, beispielsweise eine Federpaket, vorgesehen.

Der Zuführkanal 7 mündet in einen das Filtrat dem Filter 5 zuleitenden Ringkanal 12 aus, der sich in Drehrichtung des Filtereinsatzes 3 zum Filter 5 hin verjüngt (ähnlich einer Archimedischen Spirale). Von den beiden lösbar miteinander verbundenen Gehäuseteilen nimmt das eine Gehäuseteil 1 den Filtereinsatz 3 und das andere Gehäuseteil 2 die Austragsvorrichtung auf. Dies hat den Vorteil, daß unmittelbar nach einem Öffnen der Verschlußelemente zwischen den beiden Gehäuseteilen 1, 2 und nach einem Öffnen des Gehäuses Filter 5 und Austragsschnecke 9 sowie Schaber 10 für Wartungszwecke offen liegen.

Zu filtrierende verschmutzte plastische Masse wird durch den Kanal 7 in die Vorrichtung eingebracht und von dort über den Ringkanal 12, das scheibenförmige Filter 5 und dem Hohlraum des als Rotationskörper ausgebildeten Filtereinsatzes 3 in den Abführkanal 8 übergeleitet und gereinigt aus der Vorrichtung ausgebracht. Die Filtrierung wird von dem scheibenförmigen Filter 5 gewährleistet, welches vorzugsweise aus Stahlblech besteht und mittels Laser oder Elektronenstrahlen gebohrte Löcher aufweist. Das Filter 5 stützt sich während des Filtervorganges an der Ringscheibe 6 und über die Filterwelle 4 auf dem nicht näher dargestellten Lager ab. Das Filter 5 könnte auch auf der gegenüberliegenden Seite der Ringscheibe 6, also im Nahbereich der Filterwelle 4 bzw. auf beiden Seiten der Ringscheibe 6 angeordnet sein. Während des Filtriervorganges wird der Filtereinsatz 3 in Drehung versetzt, die Masse durch das Filter 5 gedrückt und werden Verunreinigungen mittels des Schabers 10 vom Filter 5 abgeschabt und von der Austragsschnecke 9 aus dem Gehäuse ausgebracht. Die Drehrichtung der Austragsschnecke 9 kann gegenüber dem Filter 5 gleich und gegenläufig sein.

## Patentansprüche

1. Vorrichtung zum kontinuierlichen Filtern von Verunreinigungen aus einer Kunststoffschmelze mit einem Filtereinsatz in Form eines um seine Rotationsachse drehbar gegenüber einem Gehäuse gelagerten und von der Kunststoffschmelze durchströmten hohlen Rotationskörpers, der in einem Strömungskanal des Gehäuses zwischen einem Zuführkanal für die zu filtrierende Kunststoffschmelze und einem Abfuhrkanal für die filtrierte Kunststoffschmelze angeordnet ist und mit einer eine mit dem Filtereinsatz zusammenwirkende Förderschnecke umfassenden Austragsvorrichtung für vom Filter zurückgehaltene Verunreinigungen, **dadurch gekennzeichnet, dass** der Filtereinsatz (3) ein stirnseitig des Rotationskörpers angeordnetes scheibenförmiges, zur Rotationsachse (A) koaxiales Filter (5) umfasst und dass die Austragsvorrichtung neben der wenigstens einen, mit ihrer Drehachse vorzugsweise parallel zur Scheibenebene angeordneten, Förderschnecke (9) mindestens einen in Drehrichtung des Filtereinsatzes (3) hinter der Förderschnecke (9) angeordneten und gegen den Filter angestellten Schaber (10) umfasst.

2. Vorrichtung nach Anspruch 1, **dadurch gekennzeichnet, dass** der Filtereinsatz (3) mit zur Rotationsachse (A) senkrecht angeordneter Scheibenebene im Gehäuse (1) drehangetrieben gelagert ist.

3. Vorrichtung nach Anspruch 1 oder 2, **dadurch gekennzeichnet, dass** der Zuführkanal (7) in einen das Filtrat dem Filter (5) zuleitenden Ringkanal (12) ausmündet, der sich in Drehrichtung des Filtereinsatzes (3), zum Filter (5) hin verjüngt.

4. Vorrichtung nach einem der Ansprüche 1 bis 3, **dadurch gekennzeichnet, dass** das Gehäuse (1, 2) wenigstens zwei lösbar miteinander verbundene Gehäuseteile (1, 2) ausbildet, wobei ein Gehäuseteil (1) den Filtereinsatz (3) und der andere Gehäuseteil (2) die Austragsvorrichtung aufnimmt.

5. Vorrichtung nach einem der Ansprüche 1 bis 4, **dadurch gekennzeichnet, dass** für den wenigstens einen Schaber (10) eine ihn gegen das Filter (5) andrückende Andrückeinrichtung (11) vorgesehen ist.

6. Vorrichtung nach einem er Ansprüche 1 bis 5, **dadurch gekennzeichnet, dass** die gegebenenfalls mehrgängig ausgebildete Schnecke (9) als Schaber ausgebildet ist.

## Claims

1. Apparatus for the continuous filtering of impurities from a plastic melt, having a filter insert in the form of a hollow rotational body which is mounted so as to be able to rotate about its axis of rotation with respect to a housing and has the plastic melt flowing through it and is disposed in a flow channel of the housing between a feed channel for the plastic melt to be filtered and a discharge channel for the filtered plastic melt, and having a discharge apparatus for impurities retained by the filter, which discharge apparatus comprises a conveying screw which cooperates with the filter insert, **characterised in that** the filter insert (3) comprises a disk-shaped filter (5) which is disposed on the end side of the rotational body and is coaxial with respect to the axis of rotation (A), and that the discharge apparatus comprises, in addition to the at least one conveying screw (9) which is disposed with its axis of rotation preferably in parallel with the disk plane, at least one scraper (10) which is disposed behind the conveying screw (9) in the direction of rotation of the filter insert (3) and is pressed against the filter.

2. Apparatus as claimed in claim 1, **characterised in that** the filter insert (3) is mounted in a rotationally driven manner in the housing (1) with a disk plane disposed perpendicularly with respect to the axis of rotation (A).

3. Apparatus as claimed in claim 1 or 2, **characterised in that** the feed channel (7) opens out into an annular channel (12) which guides the filtrate to the filter (5) and tapers towards the filter (5) in the direction of rotation of the filter insert (3).

4. Apparatus as claimed in any one of claims 1 to 3, **characterised in that** the housing (1, 2) forms at least two housing parts (1, 2) which are releasably connected to one another, wherein one housing part (1) receives the filter insert (3) and the other housing part (2) receives the discharge apparatus.

5. Apparatus as claimed in any one of claims 1 to 4, **characterised in that** a pressing device (11) is provided for the at least one scraper (10) and presses the scraper against the filter (5).

6. Apparatus as claimed in any one of claims 1 to 5, **characterised in that** the screw (9) which is optionally formed with multiple threads is designed as a scraper.

## Revendications

1. Dispositif de filtration en continu d'impuretés issues d'une matière synthétique fondue avec une cartouche de filtre, en forme d'un corps rotatif creux, montée de manière à pouvoir tourner autour de son axe de rotation par rapport à un boîtier et traversée par la matière synthétique fondue, qui est disposée dans un canal d'écoulement du boîtier entre un canal d'amenée pour la matière synthétique fondue à filtrer et un canal d'évacuation pour la matière synthétique fondue filtrée, et avec un dispositif d'extraction comprenant une vis de transport coopérant avec la cartouche de filtre pour les impuretés retenues par le filtre, **caractérisé en ce que** la cartouche de filtre (3) comprend un filtre (5) coaxial à l'axe de rotation (A), en forme de plaque, disposé sur le côté frontal du corps rotatif et **en ce que** le dispositif d'extraction comprend à côté de la vis de transport (9) disposée avec son axe de rotation de préférence parallèlement au plan de la plaque, au moins un racloir (10) mis en place contre le filtre et disposé dans le sens de rotation de la cartouche de filtre (3) derrière la vis de transport (9).

2. Dispositif selon la revendication 1, **caractérisé en ce que** la cartouche de filtre (3) est placée entraînée en rotation dans le boîtier (1) avec le plan de la plaque disposé perpendiculairement à l'axe de rotation (A).

3. Dispositif selon la revendication 1 ou 2, **caractérisé en ce que** le canal d'amenée (7) débouche dans un canal annulaire (12) menant le filtrat au filtre (5) qui se rétrécit en direction du filtre (5) dans le sens de rotation de la cartouche de filtre (3).

4. Dispositif selon l'une des revendications 1 à 3, **caractérisé en ce que** le boîtier (1, 2) forme au moins deux parties (1, 2) de boîtier reliées ensemble de manière amovible, une partie (1) de boîtier recevant la cartouche de filtre (3) et l'autre partie (2) de boîtier, le dispositif d'extraction.

5. Dispositif selon l'une des revendications 1 à 4, **caractérisé en ce que** pour le, au moins un, racloir (10), il est prévu un dispositif de pression (11) le pressant contre le filtre (5).

6. Dispositif selon l'une des revendications 1 à 5, **caractérisé en ce que** la vis (9) conçue le cas échéant à filetage multiple est réalisée en tant que racloir.
